# EUROPÄISCHE PATENTSCHRIFT

(11) **EP 2 796 743 B1**
(45) Veröffentlichungstag und Bekanntmachung des Hinweises auf die Patenterteilung: **14.12.2016**
(21) Anmeldenummer: 14163202.6
(22) Anmeldetag: 02.04.2014
(51) Int. Cl.: F16F 1/36

(54) **Elastisches Lager**
Elastic bearing
Palier élastique

(30) Priorität: 12.04.2013 DE 102013103691
(43) Veröffentlichungstag der Anmeldung: 29.10.2014
(73) Patentinhaber: Vibracoustic GmbH, 64293 Darmstadt (DE)
(72) Erfinder: Waldecker, Ralf, 56564 Neuwied (DE)
(74) Vertreter: Flügel Preissner Schober Seidel

(56) Entgegenhaltungen:
- EP-A1- 0 371 194
- DE-A1-102007 026 471
- DE-C1- 10 207 862

## Beschreibung

Die vorliegende Erfindung betrifft ein elastisches Lager, insbesondere Keillager oder Schublager zur Lagerung einer Komponente eines Antriebsstrangs, umfassend einen Kern mit wenigstens zwei daran anvulkanisierten Tragstollen und ein Gehäuse, das eine Aufnahmeöffnung zur Aufnahme des Kerns und der Tragstollen aufweist. Ferner betrifft die Erfindung ein Lagersystem mit einem solchen elastischen Lager und ein Verfahren zur Einstellung der Steifigkeit eines derartigen elastischen Lagers.

Herkömmliche Keillager werden zur Lagerung und Schwingungsdämpfung von Komponenten eines Antriebsstrangs verwendet. Derartige Lager haben zumeist einen trapezförmigen Kern und eine daran anvulkanisierte keilförmige, zweiteilige Tragfeder, die ihrerseits an einem Gehäuse anvulkanisiert ist. Infolge des keilförmigen und symmetrischen Aufbaus ergeben sich unter Last unterschiedliche Druck- und Schubverformungen der Tragfeder.

Je nach Anwendungsfall treten unterschiedliche Druck- und Schubverformungen auf, denen mittels unterschiedlicher Steifigkeitsverhältnisse entgegengewirkt werden kann. Das Steifigkeitsverhältnis lässt sich durch unterschiedliche Winkelstellungen der Tragfeder oder des Kerns mit der daran anvulkanisierten Tragfeder innerhalb des Gehäuses erzielen.

So geht aus EP 0 075 807 ein Keillager hervor, das ein Gummimetallteil aufweist, das in eine Aufnahmeöffnung eines Gehäuses eingepresst ist. Das Gummimetallteil weist einen Kern, zwei den Kern umgebende äußere Halbschalen und zwischen dem Kern und den Halbschalen einvulkanisierte Tragstollen auf. Eine Feinabstimmung und optimale Anpassung der Steifigkeit des Keillagers wird durch unterschiedliche Winkelstellungen des Gummimetallteils, bevor es in die Aufnahmeöffnung des Gehäuses eingepresst wird, erreicht.

Bei diesem bekannten elastischen Lager erfolgt somit eine Einstellung der Steifigkeit durch eine Drehung des gesamten Gummimetallteils, bevor es in die Aufnahmeöffnung eines Gehäuses eingepresst wird. Eine Verdrehung der Tragstollen relativ zu dem Kern erfolgt nicht. Dies ist allein schon aus konstruktiven Gründen nicht möglich. Somit werden die Eigenschaften des Gummis zur Einstellung der Steifigkeit nicht genutzt.

Ein weiteres bekanntes elastisches Lager in Form eines Keillagers geht aus DE 23 60 857 C2 hervor. Das Keillager umfasst ein Gummimetallteil mit einem Kern und daran anvulkanisierten Tragstollen. Ferner sind die freien Enden der Tragstollen mit Blechen versehen, die als Einpresshilfe in eine Aufnahmeöffnung eines Gehäuses dienen. Die Aufnahmeöffnung ist derart ausgebildet, dass zum Einpressen die Tragstollen verformt werden müssen. Somit hat das bekannte elastische Lager den Nachteil, dass die Aufnahmeöffnung des Gehäuses die Endstellung und somit das Steifigkeitsverhältnis des Lagers bereits vorgibt. Folglich sind für unterschiedliche Steifigkeitsverhältnisse eine Vielzahl an unterschiedlichen Aufnahmeöffnungen erforderlich.

In DE 10 2007 026 471 A1 ist ein Federbeinstützlager offenbart, das einen Innenteil zur Befestigung des Federbeinstützlagers am oberen Ende des Federbeins und eine Arbeitsfeder aufweist, die das Innenteil schwingungsdämpfend lagert. Die Arbeitsfeder umfasst eine mit dem Innenteil verbundene innere Gummifeder und zwei äußere Gummifedern, die sich über ein zweiteilig ausgeführtes Stützblech auf der inneren Gummifeder abstützen. Das Innenteil und die Arbeitsfeder sind zwischen zwei bewegbaren Kolben innerhalb eines Gehäuses gelagert. Durch eine Bewegung der Kolben auf einander zu, wird die Vorspannung der Arbeitsfeder verstärkt, so dass sich die Lagerkennung des Federbeinstützlagers verhärtet. Durch eine Bewegung der Kolben voneinander weg, wird die Lagerkennung des Federbeinstützlagers erniedrigt.

Ferner geht aus EP 0 371 194 eine Hülsengummifeder hervor, die ein Innenteil, ein Außenteil und einen das Innenteil und das Außenteil miteinander verbindenden Federkörper aus elastomeren Werkstoff aufweist. Der Federkörper hat mindestens drei Verbindungsstege, die haftend mit dem Innenteil und dem Außenteil verbunden sind. Die Verbindungsstege sind ferner mit Durchtrennungen ganz durchschnitten, in welche Zusatzkörper eingefügt werden. Dadurch erfahren die Verbindungsstege eine radiale Stauchung, was eine Relativverlagerung des Innenteils im Außenteil in senkrechter Richtung nach oben zur Folge hat.

Somit liegt der Erfindung die **Aufgabe** zugrunde, ein elastisches Lager zu schaffen, das eine flexible Einstellung der Steifigkeitsverhältnisse ermöglicht.

Zur **Lösung** der Aufgabe werden ein elastisches Lager gemäß Anspruch 1, ein Lagersystem mit einem derartigen Lager sowie ein Verfahren zur Einstellung der Steifigkeit eines derartigen Lagers vorgeschlagen.

Vorteilhafte Ausgestaltungen des erfindungsgemäßen Lagers und des erfindungsgemäßen Verfahrens sind Gegenstand der jeweiligen Unteransprüche.

Das erfindungsgemäße elastische Lager umfasst einen Kern mit wenigstens zwei daran anvulkanisierten Tragstollen und ein Gehäuse, das eine Aufnahmeöffnung zur Aufnahme des Kerns und der Tragstollen aufweist. Ein freies Ende der Tragstollen ist verstellbar in der Aufnahmeöffnung festlegbar, wobei die Tragstollen eine Winkelstellung zu dem Kern einnehmen, die veränderbar ist.

Das erfindungsgemäße Lager zeichnet sich durch seine Einstellbarkeit der Steifigkeitsverhältnisse aus. Hierdurch kann das Lager an den jeweiligen Anwendungsfall individuell angepasst werden. Hierzu wird die Winkelstellung der Tragstollen zu dem Kern vor dem Einsetzen in die Aufnahmeöffnung und/oder nach dem Einsetzen in die Aufnahmeöffnung geändert. Ferner kann zusätzlich der Kern mit den Tragstollen in unterschiedlichen Winkelstellungen in die Aufnahmeöffnung eingesetzt oder im eingesetzten Zustand in der Aufnahmeöffnung verdreht werden. Insbesondere gewährleistet die Ausgestaltung der Innenkontur der Aufnahmeöffnung die vielfältige Einstellbarkeit, so dass unter Verwendung eines einzigen Gehäuses eine Vielzahl an Steifigkeitsverhältnissen eingestellt werden können. Somit ist nur noch eine einzige Vulkanisationsgeometrie erforderlich, so dass sich hierdurch Kosten einsparen lassen. Zudem sind der Kern mit den darin anvulkanisierten Tragstollen und das Gehäuse als kostengünstige Standardteile herstellbar.

Darüber hinaus ist eine Einstellung der Steifigkeitsverhältnisse direkt vor Ort, also direkt vor dem Einbau des Lagers in ein Kraftfahrzeug, möglich. Somit ist das erfindungsgemäße Lager schnell einstellbar.

Die Änderung der Winkelstellung kann vor dem Einsetzen und/oder nach dem Einsetzen in die Aufnahmeöffnung erfolgen. Hierdurch lassen sich eine Vielzahl an unterschiedlichen Steifigkeitsverhältnissen einstellen.

In einer vorteilhaften Ausgestaltung sind die Tragstollen an ihren freien Enden mit einer Befestigungseinrichtung versehen, die zur Fixierung der Tragstollen in der Aufnahmeöffnung dienen.

Vorteilhafterweise ist die Befestigungseinrichtung aus einem endseitig anvulkanisierten Stützblech gebildet. Die Ausgestaltung der Befestigungseinrichtung als Stützblech oder Halteblech stellt eine kostengünstige Lösung zur Befestigung der Tragstollen an dem Gehäuse dar. Vorzugsweise ist das Stützblech zur Fixierung des Tragstollens in der Aufnahmeöffnung umbiegbar. Ferner können die Stützbleche auch mittels Schweißen, Löten, Kleben oder dergleichen an dem Gehäuse befestigt werden. Zudem ist es auch denkbar, die Stützbleche mittels einer Klips- oder Rastverbindung an dem Gehäuse zu befestigen. Hierzu können die Stützbleche federnd umgebogen und dann an dem Gehäuse eingeschnappt werden.

Vorteilhafterweise sind die Tragstollen im Querschnitt viereckig oder kreisförmig oder elliptisch ausgebildet. Weiterhin vorteilhaft können die Tragstollen tailliert sein. Ferner ist es auch denkbar, dass die Tragstollen im mittleren Bereich eine kleinere Querschnittsfläche als im Bereich ihrer Enden aufweisen. Anstelle eines über die Dicke durchgehenden Querschnittes mit einer vollständig stetigen Umfangslinie ist es auch möglich, dass die Tragstollen von einem prismatischen Querschnitt im Bereich ihrer Enden auf einen Querschnitt mit stetiger Umfangslinie im mittleren Bereich übergehen. Zudem können die Enden im Bereich der Haftflächen gewölbt sein. Eine derartige Ausbildung gewährleistet einen optimierten Spannungsverlauf bei einer auf das Lager einwirkenden Belastung.

Weiterhin vorteilhaft ist die Aufnahmeöffnung kreisförmig ausgebildet. Dies ermöglicht eine stufenlose Verstellbarkeit der Steifigkeitsverhältnisse. Ferner kann die Aufnahmeöffnung auch ellipsenförmig ausgebildet sein.

Vorteilhaft ist die Aufnahmeöffnung mit einer Vielzahl an Aussparungen versehen, in die die Tragstollen einsetzbar sind, um so unterschiedliche Winkelstellungen einzunehmen. Dies ermöglicht eine gestufte Einstellung der Steifigkeitsverhältnisse, wobei die Aussparungen derart in das Gehäuse eingebracht sind, dass eine Vielzahl an in der Praxis vorkommenden Belastungen und die hierzu erforderlichen Steifigkeitsverhältnisse abgedeckt werden.

Weiterhin vorteilhaft sind der Kern und die Tragstollen in die Aufnahmeöffnung des Gehäuses eingepresst.

Des Weiteren betrifft die Erfindung ein Lagersystem mit einem erfindungsgemäßen elastischen Lager und wenigstens einer Verstelleinrichtung, die über ein Stellglied mit den Tragstollen zum Verstellen derselbigen in unterschiedliche Winkelstellungen verbunden ist. Das System kann als aktives Lager in einem Fahrzeug integriert werden, so dass je nach Belastung ein hierzu erforderliches Steifigkeitsverhältnis automatisch eingestellt werden kann.

Ferner betrifft die Erfindung ein Verfahren zur Einstellung der Steifigkeit eines erfindungsgemäßen Lagers, das die folgenden Schritte umfasst. Zuerst wird die Winkelstellung von Tragstollen, die an einem Kern anvulkanisiert sind, geändert und anschließend wird der Kern mit den Tragstollen in der voreingestellten Winkelstellung in eine Aufnahmeöffnung eines Gehäuses eingesetzt. Abschließend werden die Tragstollen an dem Gehäuse mittels einer Befestigungseinrichtung befestigt. Ferner kann zur Einstellung der Steifigkeit zuerst ein Kern mit daran anvulkanisierten Tragstollen in unterschiedlichen Winkelstellungen in eine Aufnahmeöffnung eines Gehäuses eingesetzt werden und anschließend wird die Winkelstellung der Tragstollen zu dem Kern innerhalb der Aufnahmeöffnung geändert. Abschließend werden die Tragstollen an dem Gehäuse mittels einer Befestigungseinrichtung befestigt. Unter einer Änderung der Winkelstellung wird im Sinne der Erfindung eine Änderung der Winkelstellung der Tragstollen zu dem Kern und/oder eine Drehung des Kerns mit den Tragstollen vor dem Einsetzen verstanden. Das Verfahren ermöglicht somit eine einfache und schnelle Einstellung der erforderlichen Steifigkeitsverhältnisse direkt am Kraftfahrzeug.

In einer vorteilhaften Ausgestaltung ist die Befestigungseinrichtung aus einem endseitig anvulkanisierten Stützblech gebildet, mittels dem der Tragstollen in der Aufnahmeöffnung fixiert wird. Hierdurch wird eine einfache, schnelle und kostengünstige Lösung zur Befestigung der Tragstollen bereitgestellt. Vorzugsweise wird das Stützblech zur Fixierung in der Aufnahmeöffnung umgebogen. Ferner können die Stützbleche oder Haltebleche an dem Gehäuse angeschweißt, angeklebt, angelötet oder dergleichen werden. Zudem können die Stützbleche an dem Gehäuse verrastet oder eingeklipst werden.

Nachfolgend wird die Erfindung anhand von Ausführungsbeispielen näher erläutert, die in den Zeichnungen schematisch dargestellt sind. Hierbei zeigen:
- Fig. 1: eine Draufsicht auf ein erfindungsgemäßes elastisches Lager, wobei die Tragstollen in Normalstellung und in einer geänderten Stellung dargestellt sind;
- Fig. 2: einen Schnitt durch das erfindungsgemäße Lager entlang der Linie II-II in Fig. 1; und
- Fig. 3: eine schematische Darstellung eines erfindungsgemäßen Lagersystems mit einem erfindungsgemäßen Lager.

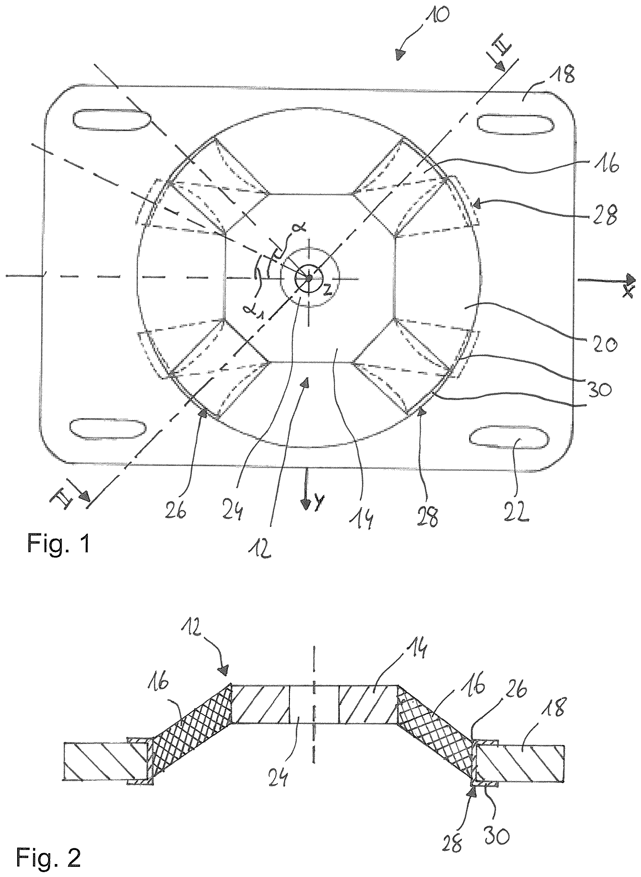

In Fig. 1 ist ein elastisches Lager 10, insbesondere Keil- oder Schublager, zur Lagerung und Schwingungsdämpfung von Antriebsaggregaten gezeigt.

Das elastische Lager 10 weist ein Gummimetallteil 12 mit einem Kern 14 und daran anvulkanisierte Tragstollen 16 und ein Gehäuse 18 auf. Das Gummimetallteil 12 ist in eine kreisförmige Aufnahmeöffnung 20 des Gehäuses 18 eingesetzt, insbesondere eingepresst. Die Aufnahmeöffnung 20 kann auch andere Querschnittsformen aufweisen. Das Gehäuse 18 weist zudem Befestigungsöffnungen 22 zur Befestigung an einem nicht dargestellten Kraftfahrzeugteil auf. Ferner ist in dem Kern 14 eine Durchgangsbohrung 24 eingebracht, über die eine Anbindung an einem nicht dargestellten zu lagernden Antriebsaggregat erfolgt.

Wie in Fig. 1 ersichtlich ist, nehmen die Tragstollen 16 zu dem Kern 14 eine Winkelstellung α ein, wobei diese Winkelstellung aufgrund der elastischen Eigenschaften der Tragstollen 16 veränderbar ist. In Fig. 1 sind die Tragstollen 16 mittels der durchgezogenen Linien in ihrer Normalstellung gezeigt. Die Normalstellung entspricht derjenigen Position der Tragstollen 16, wie sie an den Kern 14 anvulkanisiert sind. Im vorliegenden Ausführungsbeispiel weisen die Tragstollen 16 einen quadratischen Querschnitt auf, wobei die Kontur der Tragstollen tailliert ist, wie durch die strichlinierten Kreissegmente dargestellt ist. Ferner kann der Querschnitt der Tragstollen 16 auch rechteckförmig, rund oder elliptisch ausgebildet sein.

Infolge einer Änderung der Winkelstellung der Tragstollen 16 ist es möglich, unterschiedliche Steifigkeitsverhältnisse des Lagers 10 einzustellen. Hierzu werden die Tragstollen 16 von ihrer Normalstellung um die z-Achse, also senkrecht zur x-y-Ebene gedreht, so dass diese eine geänderte Winkelstellung α₁ zu dem Kern 14 einnehmen, wie in Fig. 1 strichliniert dargestellt ist. Infolge der kreisförmigen Ausgestaltung der Aufnahmeöffnung 20 können somit die Tragstollen 16 eine Vielzahl an unterschiedlichen Winkelstellungen innerhalb der Aufnahmeöffnung 20 einnehmen. Somit ist die Verdrehrichtung der Tragstollen 16 nicht auf die strichliniert dargestellte Richtung beschränkt, sondern die Tragstollen 16 können auch in die entgegengesetzte Richtung verdreht werden. Ferner kann die Position der Tragstollen 16 auch in Richtung der z-Achse verändert werden.

Wie in Fig. 2 dargestellt ist, weisen die Tragstollen 16 an ihren freien Enden 26 jeweils eine Befestigungseinrichtung 28 auf, die zum Befestigen der Tragstollen 16 in der Aufnahmeöffnung 20 dient. Die Befestigungseinrichtung 26 ist als Stützblech 30 ausgebildet, das zur Fixierung der Tragstollen 16 an dem Gehäuse 18 umgebogen wird. Ferner können die Stützbleche 30 an dem Gehäuse 18 angeschweißt, angelötet oder angeklebt werden. Darüber hinaus ist es auch möglich, die Stützbleche 30 an dem Gehäuse 18 zu verrasten oder einzuklipsen.

Bei der in Fig. 1 gezeigten Normalstellung der Tragstollen 16 beträgt das Steifigkeitsverhältnis in der x-y-Ebene 1 : 1. In der strichliniert gezeigten Stellung beträgt das Steifigkeitsverhältnis in der x-y-Ebene 3 : 1. Es sind jedoch eine Vielzahl an unterschiedlichen Winkelstellungen der Tragstollen 16 aufgrund der kreisförmigen Ausgestaltung der Aufnahmeöffnung 20 und somit eine Vielzahl an unterschiedlichen Steifigkeitsverhältnisse in der x-y-Ebene möglich. Ferner kann zusätzlich zur Einstellung der Steifigkeitsverhältnisse das Gummimetallteil 12 vor dem Einsetzen in die Aufnahmeöffnung 20 um die z-Achse gedreht werden.

Im Folgenden werden zwei mögliche Verfahren zur Einstellung der Steifigkeitsverhältnisse in der x-y-Ebene beschrieben. Bei einem ersten möglichen Verfahren wird zuerst die Winkelstellung der Tragstollen 16 geändert und/oder der Kern 14 wird um die z-Achse gedreht. Anschließend wird der Kern 14 mit den Tragstollen 16 in der geänderten Winkelstellung in die Aufnahmeöffnung 20 des Gehäuses 18 eingepresst. Schließlich werden die Stützbleche 30 umgebogen, um so die Tragstollen 16 in der geänderten Winkelstellung zu fixieren.

Bei einem zweiten möglichen Verfahren werden zunächst der Kern 14 und die Tragstollen 16 in die Aufnahmeöffnung 20 des Gehäuses 18 in unterschiedlichen Winkelstellungen eingesetzt und im Anschluss daran wird die Winkelstellung der Tragstollen 16 zu dem Kern 14 innerhalb der Aufnahmeöffnung 20 geändert. Abschließend werden die Stützbleche 30 umgebogen, um die Tragstollen 16 in der geänderten Winkelstellung an dem Gehäuse 18 zu fixieren.

Ferner ist es bei beiden Verfahren auch möglich, die Stützbleche 30 an dem Gehäuse 18 anzuschweißen, anzukleben oder anzulöten. Darüber hinaus können die Stützbleche 30 auch mittels einer Rast- oder Klipsverbindung mit dem Gehäuse 18 verbunden werden.

Des Weiteren können die Tragstollen 16 auch senkrecht zu der x-y-Ebene verdreht werden.

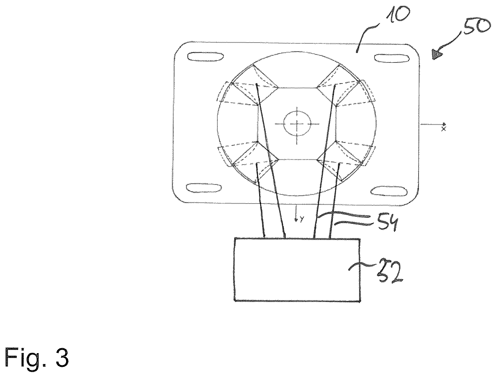

In Fig. 3 ist ein erfindungsgemäßes Lagersystem 50 gezeigt, das ein erfindungsgemäßes Lager 10 sowie eine Verstelleinrichtung 52 aufweist. Die Verstelleinrichtung 52 ist über Stellglieder 54 mit den Tragstollen 16 verbunden. Mittels der Verstelleinrichtung 52 und den Stellgliedern 54 kann die Winkelstellung der Tragstollen 16 innerhalb der Aufnahmeöffnung 20 geändert werden. Beispielsweise kann die Verstelleinrichtung 52 ein Elektromotor und die Stellglieder 54 können ein Gestänge oder ein Getriebe sein. Im vorliegenden Ausführungsbeispiel sind die Stellglieder 54 nur schematisch mittels Linien dargestellt. Das erfindungsgemäße Lagersystem 50 kann somit als aktives Lager in einem Kraftfahrzeug eingesetzt werden, um die erforderlichen Steifigkeitsverhältnisse automatisch anzupassen.

Das erfindungsgemäße elastische Lager 10 zeichnet sich dadurch aus, dass die Steifigkeitsverhältnisse des Lagers 10 eingestellt werden können. Somit ist nur noch eine einzige Vulkanisationsgeometrie erforderlich, so dass sich hierdurch Kosten einsparen lassen. Ferner ist eine Einstellbarkeit der Steifigkeitsverhältnisse direkt vor dem Einbau am Kraftfahrzeug möglich.

### Bezugszeichenliste

- 10: elastisches Lager
- 12: Gummimetallteil
- 14: Kern
- 16: Tragstollen
- 18: Gehäuse
- 20: Aufnahmeöffnung
- 22: Befestigungsöffnung
- 24: Durchgangsbohrung
- 26: freies Ende
- 28: Befestigungseinrichtung
- 30: Stützblech
- 50: Lagersystem
- 52: Verstelleinrichtung
- 54: Stellglied

- α: Winkelstellung
- α₁: geänderte Winkelstellung
- x: x-Achse
- y: y-Achse
- z: z-Achse

## Patentansprüche

1. Elastisches Lager (10), insbesondere Keillager oder Schublager zur Lagerung einer Komponente eines Antriebsstrangs, umfassend einen Kern (14) mit wenigstens zwei daran anvulkanisierten Tragstollen (16) aus einem elastomeren Material und ein Gehäuse (18), das eine Aufnahmeöffnung (20) zur Aufnahme des Kerns (14) und der Tragstollen (16) aufweist, wobei ein freies Ende (26) der Tragstollen (16) verstellbar in der Aufnahmeöffnung (20) festlegbar ist, **dadurch gekennzeichnet, dass** die Tragstollen (16) eine Winkelstellung (α) zu dem Kern (14) einnehmen, die veränderbar ist.

2. Elastisches Lager nach Anspruch 1, **dadurch gekennzeichnet, dass** die Tragstollen (16) an ihren freien Enden (26) mit einer Befestigungseinrichtung (28) versehen sind, die zur Fixierung der Tragstollen (16) in der Aufnahmeöffnung (20) dienen.

3. Elastisches Lager nach Anspruch 2, **dadurch gekennzeichnet, dass** die Befestigungseinrichtung (28) aus einem endseitig anvulkanisierten Stützblech (30) gebildet ist.

4. Elastisches Lager nach einem der vorhergehenden Ansprüche, **dadurch gekennzeichnet, dass** die Tragstollen (16) im Querschnitt viereckig oder kreisförmig oder elliptisch ausgebildet sind.

5. Elastisches Lager nach Anspruch 4, **dadurch gekennzeichnet, dass** die Tragstollen (16) tailliert sind.

6. Elastisches Lager nach einem der vorhergehenden Ansprüche, **dadurch gekennzeichnet, dass** die Aufnahmeöffnung (20) kreisförmig ausgebildet ist.

7. Elastisches Lager nach einem der vorhergehenden Ansprüche, **dadurch gekennzeichnet, dass** der Kern (14) und die Tragstollen (16) in die Aufnahmeöffnung (20) des Gehäuses (18) eingepresst sind.

8. Lagersystem (50) mit einem elastischen Lager (10) nach einem der Ansprüche 1 bis 7 und einer Verstelleinrichtung (52), die über ein Stellglied (54) mit den Tragstollen (16) zum Verstellen derselbigen in unterschiedliche Winkelstellungen verbunden ist.

9. Verfahren zur Einstellung der Steifigkeit eines elastischen Lagers (10) nach einem der Ansprüche 1 bis 7, das die folgenden Schritte umfasst:
a. Änderung der Winkelstellung von Tragstollen (16), die an einem Kern (14) anvulkanisiert sind und Einsetzen des Kerns (14) mit den Tragstollen (16) in der voreingestellten Winkelstellung in eine Aufnahmeöffnung (20) eines Gehäuses (18); oder
b. Einsetzen eines Kerns (14) mit daran anvulkanisierten Tragstollen (16) in unterschiedlichen Winkelstellungen in eine Aufnahmeöffnung (20) eines Gehäuses (18) und Änderung der Winkelstellung der Tragstollen (16) zu dem Kern (14) innerhalb der Aufnahmeöffnung (20); und
c. Befestigung der Tragstollen (16) an dem Gehäuse (18) mittels einer Befestigungseinrichtung (28).

10. Verfahren nach Anspruch 9, **dadurch gekennzeichnet, dass** die Befestigungseinrichtung (28) aus einem endseitig anvulkanisierten Stützblech (30) gebildet ist, mittels dem der Tragstollen (16) in der Aufnahmeöffnung (20) fixiert wird.

## Claims

1. Elastic mount (10), in particular a wedge mount or thrust mount, for supporting a component of a drive train, comprising a core (14) with at least two supporting bars (16), which are attached thereto by vulcanization and consist of an elastomeric material, and a housing (18), which has an accommodating opening (20) for accommodating the core (14) and the supporting bars (16), wherein a free end (26) of the supporting bars (16) can be fixed in an adjustable manner in the accommodating opening (20), **characterised in that** the supporting bars (16) assume an angular position (α) relative to the core (14) that is variable.

2. Elastic mount according to claim **1, characterised in that** the supporting bars (16) are provided at their free ends (26) with a fastening device (28) that serves for fixing the supporting bars (16) in the accommodating opening (20).

3. Elastic mount according to claim 2, **characterised in that** the fastening device (28) is formed from a support plate (30) attached by vulcanization to the end side.

4. Elastic mount according to any one of the preceding claims, **characterised in that** the supporting bars (16) are formed with a quadrangular or circular or elliptical cross section.

5. Elastic mount according to claim 4, **characterised in that** the supporting bars (16) are waisted.

6. Elastic mount according to any one of the preceding claims, **characterised in that** the accommodating opening (20) is formed to be circular.

7. Elastic mount according to any one of the preceding claims, **characterised in that** the core (14) and the supporting bars (16) are pressed into the accommodating opening (20) of the housing (18).

8. Mount system (50) with an elastic mount (10) according to any one of the claims 1 to 7 and an adjusting device (52) which is connected via an actuator (54) to the supporting bars (16) for adjusting the same in different angular positions.

9. Method for adjusting the rigidity of an elastic mount (10) according to any one of the claims 1 to 7, comprising the following steps:
a. changing the angular position of supporting bars (16) which are attached by vulcanization to a core (14) and inserting the core (14) with the supporting bars (16) in the pre-set angular position into an accommodating opening (20) of a housing (18); or
b. inserting the core (14) with supporting bars (16) attached thereto by vulcanization into an accommodating opening (20) of a housing (18) in different angular positions and changing the angular position of the supporting bars (16) relative to the core (14) within the accommodating opening (20); and
c. attaching the supporting bars (16) to the housing (18) by means of a fastening device (28).

10. Method according to claim 9, **characterised in that** the fastening device (28) is formed from a support plate (30), which is attached by vulcanization to the end side and by means of which the supporting bar (16) is fixed in the accommodating opening (20).

## Revendications

1. Support élastique (10), en particulier support en coin ou support de butée pour monter un composant d'un groupe motopropulseur, comportant un noyau (14) pourvu d'au moins deux bras porteurs (16) rapportés par vulcanisation sur celui-ci et constitués d'un matériau élastomère, et un boîtier (18) qui présente une ouverture de réception (20) pour recevoir le noyau (14) et les bras porteurs (16), une extrémité libre (26) des bras porteurs (16) étant susceptible d'être fixée de façon réglable dans l'ouverture de réception (20), **caractérisé en ce que** les bras porteurs (16) occupent une position angulaire (α) par rapport au noyau (14), qui est modifiable.

2. Support élastique selon la revendication 1, **caractérisé en ce qu'**à leurs extrémités libres (26), les bras porteurs (16) sont pourvus d'un dispositif de fixation (28) qui sert à fixer les bras porteurs (16) dans l'ouverture de réception (20).

3. Support élastique selon la revendication 2, **caractérisé en ce que** le dispositif de fixation (28) est formé par une tôle d'appui (30) rapportée par vulcanisation du côté extrémité.

4. Support élastique selon l'une des revendications précédentes, **caractérisé en ce que** les bras porteurs (16) sont réalisés avec une section transversale quadrangulaire ou circulaire ou elliptique.

5. Support élastique selon la revendication 4, **caractérisé en ce que** les bras porteurs (16) sont cintrés.

6. Support élastique selon l'une des revendications précédentes, **caractérisé en ce que** l'ouverture de réception (20) est réalisée en forme circulaire.

7. Support élastique selon l'une des revendications précédentes, **caractérisé en ce que** le noyau (14) et les bras porteurs (16) sont enfoncés à la presse dans l'ouverture de réception (20) du boîtier (18).

8. Système de support (50) comportant un support élastique (10) selon l'une des revendications 1 à 7 et un dispositif de réglage (52) qui est relié aux bras porteurs (16) via un organe d'actionnement (54) en vue de régler ceux-ci dans différentes positions angulaires.

9. Procédé pour régler la raideur d'un support élastique (10) selon l'une des revendications 1 à 7, qui comprend les étapes suivantes :
a. on modifie la position angulaire de bras porteurs (16) qui sont rapportés par vulcanisation sur un noyau (14), et on met en place le noyau (14) avec les bras porteurs (16) dans la position angulaire préréglée dans une ouverture de réception (20) d'un boîtier (18) ; ou
b. on met en place un noyau (14) pourvus de bras porteurs (16) rapportés par vulcanisation sur celui-ci dans des positions angulaires différentes dans une ouverture de réception (20) d'un boîtier (18), et on modifie la position angulaire des bras porteurs (16) par rapport au noyau (14) à l'intérieur de l'ouverture de réception (20) ; et
c. on fixe les bras porteurs (16) sur le boîtier (18) au moyen d'un dispositif de fixation (28).

10. Procédé selon la revendication 9, **caractérisé en ce que** le dispositif de fixation (28) est formé par une tôle d'appui (30) rapportée par vulcanisation du côté extrémité, au moyen de laquelle on fixe le bras porteur (16) dans l'ouverture de réception (20).
